# EUROPEAN PATENT APPLICATION

(11) **EP 4 636 539 A1**
(43) Date of publication of application: **22.10.2025**
(21) Application number: 24769631.3
(22) Date of filing: 08.01.2024
(51) Int. Cl.: G06F 1/3234

(54) **DISPLAY SCREEN CONTROL METHOD AND ELECTRONIC DEVICE**

(30) Priority: 14.03.2023 CN 202310268041
(71) Applicant: Huawei Technologies Co., Ltd., Shenzhen, Guangdong 518129 (CN)
(72) Inventor: WU, Yongqing, Shenzhen, Guangdong 518129 (CN); HU, Jun, Shenzhen, Guangdong 518129 (CN); FANG, Yun, Shenzhen, Guangdong 518129 (CN); GU, Xingquan, Shenzhen, Guangdong 518129 (CN); LI, Xichen, Shenzhen, Guangdong 518129 (CN)
(74) Representative: Körber, Martin Hans
(86) International application number: PCT/CN2024/071221
(87) International publication number: WO 2024/187935

(57) **Abstract**

A display control method and an electronic device are provided, and relate to the field of electronic device technologies. The method includes: obtaining a current proximity light status of the electronic device when a target function of an application is enabled, where the proximity light status indicates that an object is close to or far away from the electronic device. In this case, whether the electronic device is blocked may be determined based on a proximity light status of the electronic device. Then, when a display of the electronic device is in a screen-on state, if the current proximity light status changes compared with a previous proximity light status, and the current proximity light status indicates that an object is close to the electronic device, it indicates that the electronic device is blocked. Therefore, it is determined to delay, for preset duration, turning off the display.

## Description

This application claims priority to Chinese Patent Application No. 202310268041.8, filed with the China National Intellectual Property Administration on March 14, 2023 and entitled "DISPLAY CONTROL METHOD AND ELECTRONIC DEVICE", which is incorporated herein by reference in its entirety.

### TECHNICAL FIELD

This application relates to the field of electronic device technologies, and in particular, to a display control method and an electronic device.

### BACKGROUND

Currently, in a specific scenario (for example, a call scenario) of a mobile phone, a display of the mobile phone is easily triggered to be off (or referred to as screen-off/black screen/screen-off) when a front-facing camera of the mobile phone is blocked. This makes a control center or the like difficult to pull down, causing inconvenience to a user.

### SUMMARY

This application provides a display control method and an electronic device, to resolve a problem in a specific scenario (for example, a call scenario) that screen-off of a mobile phone is easily triggered when a front-facing camera of the mobile phone is blocked. A time for screen-off of the mobile phone is delayed, so that a user has sufficient time to pull down a control center or the like, thereby bringing convenience to the user.

To achieve the foregoing objective, this application uses the following technical solutions.

According to a first aspect, a display control method is provided, applied to an electronic device having a display. The method includes: obtaining a current proximity light status of the electronic device when a target function of an application is enabled, where the proximity light status indicates that an object is close to or far away from the electronic device; and if the display is in a screen-on state, when the current proximity light status changes compared with a previous proximity light status, and the current proximity light status indicates that an object is close to the electronic device, determining to delay, for preset duration, turning off the display.

Based on the foregoing technical solution, when the target function of the application is enabled, for example, the target function may be a call function, the current proximity light status of the electronic device is obtained, and the proximity light status may indicate that an object is close to or far away from the electronic device, so that whether the electronic device is blocked may be determined according to the proximity light status. When the display is in the screen-on state, the current proximity light status changes compared with the previous proximity light status, and the current proximity light status indicates that an object is close to the electronic device, it may indicate that the electronic device is blocked. In this case, it is determined to delay, for the preset duration, turning off the display. Specifically, when the display is to be turned off, a time for screen-off is delayed. In a scenario including but not limited to a call scenario, if the electronic device is blocked, for example, the electronic device may be blocked when a user pulls down a control center, a notification bar, or the like, delaying the time for screen-off enables the user to have sufficient time for pulling down the control center or the notification bar, thereby bringing convenience to the user. In addition, when an object repeatedly and quickly moves close to and far away from the electronic device, the proximity light status is quickly and repeatedly switched between a state indicating that the object is close to the electronic device and a state indicating that the object is far away from the electronic device, and the electronic device needs to switch between screen-off and screen-on. However, in this application, because screen-off is delayed for the preset duration, the proximity light status of the electronic device may already be switched, before the screen is turned off, to the state indicating that the object is far away from the electronic device. Therefore, the electronic device does not experience a momentary black screen.

In a possible design, after determining to delay, for the preset duration, turning off the display, the method further includes: delaying, for the preset duration, turning off the display. Based on this design, if the electronic device is blocked, for example, the electronic device may be blocked when the user pulls down the control center, the notification bar, or the like, the electronic device performs an operation of delaying, for the preset duration, turning off the display, so that the user has sufficient time to pull down the control center, the notification bar, or the like. This brings convenience to the user, and an operation of turning off the display can save power and prevent an accidental touch.

In a possible design, delaying, for the preset duration, turning off the display includes: obtaining a proximity light status that is of the electronic device after the preset duration; and when the proximity light status that is of the electronic device after the preset duration indicates that an object is close to the electronic device, turning off the display. Based on this design, after delaying for the preset duration and before turning off the screen, the electronic device re-determines whether the current proximity light status indicates that an object is close to the electronic device, and turns off the display only if the current proximity light status indicates that the object is close to the electronic device. In this way, power is saved and an accidental touch on the screen is avoided.

In a possible design, before determining to delay, for the preset duration, turning off the display, the method further includes: determining that the application is a preset application. Based on this design, only when the application is the preset application, the display is turned off after a delay of the preset duration. When the application is not the preset application, the display is not turned off after the delay of the preset duration. This can ensure application security, and improve user experience.

In a possible design, after the obtaining a current proximity light status of the electronic device, the method further includes: if the display is in a screen-off state, when the current proximity light status changes compared with a previous proximity light status, and the current proximity light status indicates that an object is far away from the electronic device, turning on the display. Based on this design, when the screen of the electronic device is turned off, if the proximity light status changes and indicates that an object is far away from the electronic device, it indicates that the electronic device changes from a blocked state to an unblocked state. In this case, the screen is turned on. In this way, it is convenient for the user to operate the electronic device while power saving is ensured and an accidental touch on the screen is avoided.

In a possible design, after the obtaining a current proximity light status of the electronic device, the method further includes: if the display is in a screen-off state, when the current proximity light status does not change compared with a previous proximity light status, and the current proximity light status indicates that an object is close to the electronic device, keeping the display off. Based on this design, when the screen of the electronic device is turned off, if the proximity light status does not change and indicates that the object is close to the electronic device, it indicates that the electronic device is still blocked. In this case, the screen is still kept off, so that power can be saved and an accidental touch on the screen is avoided.

In a possible design, after the obtaining a current proximity light status of the electronic device, the method further includes: if the display is in a screen-on state, when the current proximity light status does not change compared with a previous proximity light status, and the current proximity light status indicates that an object is far away from the electronic device, keeping the display on. Based on this design, when the screen of the electronic device is turned on, if the proximity light status does not change and indicates that an object is far away from the electronic device, it indicates that the electronic device is still not blocked. In this case, the screen is kept on, so that the user can conveniently operate the electronic device.

In a possible design, after determining to delay, for the preset duration, turning off the display, the method further includes: obtaining a proximity light status that is of the electronic device within the preset duration; and if the proximity light status that is of the electronic device within the preset duration indicates that an object is far away from the electronic device, terminating performing the operation of delaying, for the preset duration, turning off the display. It may be understood that the operation of delaying, for the preset duration, turning off the display may include an operation of timing the preset duration and turning off the display. For example, terminating performing the operation of delaying, for the preset duration, turning off the display may be performed at various occasions, for example, in a process of timing the preset duration or before turning off the display. Based on this design, because the proximity light status of the electronic device may change within the preset duration, when the proximity light status of the electronic device indicates that an object is far away from the electronic device, that is, the proximity light status of the electronic device changes, the operation of delaying, for the preset duration, turning off the display is terminated, so that the screen can be turned on immediately.

In a possible design, after determining to delay, for the preset duration, turning off the display, the method further includes: creating a delay processing task, where the delay processing task is a task of delaying, for the preset duration, turning off the display; and terminating performing the operation of delaying, for the preset duration, turning off the display includes: deleting the delay processing task. Based on this design, after it is determined to delay, for the preset duration, turning off the display, the delay processing task is created, to perform the operation of delaying, for the preset duration, turning off the display. The proximity light status of the electronic device may change within the preset duration. Therefore, when the proximity light status of the electronic device indicates that an object is far away from the electronic device, that is, the proximity light status of the electronic device changes, the delay processing task may be deleted to terminate the operation of delaying the screen-off for the preset duration, thereby immediately turning on the screen.

In a possible design, the preset duration is greater than or equal to 250 ms. Based on this design, when an object repeatedly and quickly moves close to and far away from the electronic device, the proximity light status is quickly and repeatedly switched between a state indicating that the object is close to the electronic device and a state indicating that the object is far away from the electronic device. Therefore, the electronic device needs to switch between screen-off and screen-on. In this application, the screen-off is delayed for the preset duration. If the preset duration is quite short, the electronic device may experience a momentary black screen. Therefore, the preset duration is greater than or equal to 250 ms, that is, the preset duration is set to a relatively large value. In this case, before the screen is turned off, the proximity light status of the electronic device may already switch from the state indicating that the object is close to the electronic device to the state indicating that the object is far away from the electronic device. In this way, a probability that the electronic device experiences a momentary black screen can be reduced.

In a possible design, the preset duration is less than or equal to 350 ms. Based on this design, if the preset duration is excessively large, the screen of the electronic device may be continuously on, and the user may perceive freezing of the electronic device. The preset duration is less than or equal to 350 ms, that is, the preset duration is set to a value that is not excessively large, so that screen-off effect of the electronic device can be smoother, and a probability that the screen of the electronic device is continuously on and the user perceives freezing of the electronic device is reduced.

In a possible design, the method is performed by a power management service of the electronic device. Based on this design, the operation of delaying, for the preset duration, turning off the display is integrated into the power management service, to reduce complexity of implementation.

In a possible design, the target function includes a call function. Based on this design, the target function includes the call function, that is, the solution of delaying the preset screen-off may be applied to a call scenario. In this way, a problem that screen-off is easily triggered when the electronic device is blocked in the call scenario can be resolved. A time for screen-off of the electronic device is delayed, so that the user has sufficient time to pull down the control center and the like, thereby bringing convenience to the user.

In a possible design, after delaying, for the preset duration, turning off the display, the method further includes: when the target function of the application is enabled, obtaining a next proximity light status of the electronic device; and if the display is in a screen-off state, when the next proximity light status changes compared with the current proximity light status, and the next proximity light status indicates that an object is far away from the electronic device, turning on the display. Based on this design, after the screen-off is delayed for the preset duration, if the target function of the application is still enabled, a next proximity light status of the electronic device is obtained. If the display is turned off, when the next proximity light status changes and indicates that an object is far away from the electron, it indicates that the electronic device changes from the blocked state to the unblocked state. In this case, the screen is turned on, so that the user can operate the electronic device conveniently.

In a possible design, after delaying, for the preset duration, turning off the display, the method further includes: when the target function of the application is enabled, obtaining a next proximity light status of the electronic device; and if the display is in a screen-off state, when the next proximity light status does not change compared with the current proximity light status, and the next proximity light status indicates that an object is close to the electronic device, keeping the display off. Based on this design, after the screen-off is delayed for the preset duration, if the target function of the application is still enabled, a next proximity light status of the electronic device is obtained. If the display is turned off, when the next proximity light status changes and indicates that an object is close to the electron, it indicates that the electronic device is still in the blocked state. In this case, the screen is kept off, so that power can be saved and an accidental touch on the screen is avoided.

In a possible design, the preset duration is 300 ms. This considers both a momentary black screen and smooth effect of screen-off of the electronic device. Based on this design, the preset duration is set to 300 ms, that is, an appropriate value, so that a probability that the electronic device experiences a momentary black screen can be reduced, the screen-off effect of the electronic device can be smoother, and the probability that the screen of the electronic device is continuously on and the user perceives freezing of the electronic device is reduced.

According to a second aspect, an electronic device is provided, including an obtaining unit and a processing unit. The obtaining unit is configured to: obtain a current proximity light status of the electronic device when a target function of an application is enabled, where the proximity light status indicates that an object is close to or far away from the electronic device. The processing unit is configured to: if the display is in a screen-on state, when the current proximity light status changes compared with a previous proximity light status, and the current proximity light status indicates that an object is close to the electronic device, determine to delay, for preset duration, turning off the display.

In a possible design, the processing unit is further configured to delay, for the preset duration, turning off the display.

In a possible design, the obtaining unit is further configured to obtain a proximity light status that is of the electronic device after the preset duration; and the processing unit is further configured to: when the proximity light status that is of the electronic device after the preset duration indicates that an object is close to the electronic device, turn off the display.

In a possible design, the processing unit is further configured to determine that the application is a preset application.

In a possible design, the processing unit is further configured to: if the display is in a screen-off state, when the current proximity light status changes compared with a previous proximity light status, and the current proximity light status indicates that an object is far away from the electronic device, turn on the display.

In a possible design, the processing unit is further configured to: if the display is in a screen-off state, when the current proximity light status does not change compared with a previous proximity light status, and the current proximity light status indicates that an object is close to the electronic device, keep the display off.

In a possible design, the processing unit is further configured to: if the display is in a screen-on state, when the current proximity light status does not change compared with a previous proximity light status, and the current proximity light status indicates that an object is far away from the electronic device, keep the display on.

In a possible design, the obtaining unit is further configured to obtain a proximity light status that is of the electronic device within the preset duration; and the processing unit is further configured to: if the proximity light status that is of the electronic device within the preset duration indicates that an object is far away from the electronic device, terminate performing the operation of delaying, for the preset duration, turning off the display.

In a possible design, the processing unit is further configured to create a delay processing task, where the delay processing task is a task of delaying, for the preset duration, turning off the display; and the processing unit is specifically configured to delete the delay processing task.

In a possible design, the preset duration is greater than or equal to 250 ms.

In a possible design, the preset duration is less than or equal to 350 ms.

In a possible design, the method is performed by a power management service of the electronic device.

In a possible design, the target function includes a call function.

In a possible design, the obtaining unit is further configured to: when the target function of the application is enabled, obtain a next proximity light status of the electronic device; and the processing unit is further configured to: if the display is in a screen-off state, when the next proximity light status changes compared with the current proximity light status, and the next proximity light status indicates that an object is far away from the electronic device, turn on the display.

In a possible design, the obtaining unit is further configured to: when the target function of the application is enabled, obtain a next proximity light status of the electronic device; and the processing unit is further configured to: if the display is in a screen-off state, when the next proximity light status does not change compared with the current proximity light status, and the next proximity light status indicates that an object is close to the electronic device, keep the display off.

In a possible design, the preset duration is 300 ms.

According to a third aspect, an electronic device is provided, including a processor, a memory, and a display. The memory is coupled to the processor, and the memory is configured to store computer program code, where the computer program code includes computer instructions. The processor reads the computer instructions from the memory, so that the electronic device performs the method according to any one of the first aspect or the designs of the first aspect. Optionally, the memory may be coupled to the processor, or may be independent of the processor.

In a possible design, the electronic device further includes a communication interface, where the communication interface may be used by the electronic device to communicate with another apparatus. For example, the communication interface may be a transceiver, an input/output interface, an interface circuit, an output circuit, an input circuit, a pin, a related circuit, or the like.

According to a fourth aspect, a computer-readable storage medium is provided, where the computer-readable storage medium includes a computer program or instructions. When the computer program or instructions are run on an electronic device, the electronic device is enabled to perform the method according to any one of the first aspect or the designs of the first aspect.

According to a fifth aspect, a computer program product is provided. When the computer program product runs on a computer, the computer is enabled to perform the method according to any one of the first aspect or the designs of the first aspect.

According to a sixth aspect, a chip system is provided, including at least one processor and at least one interface circuit. The at least one interface circuit is configured to: perform a transceiver function, and send instructions to the at least one processor. When the at least one processor executes the instructions, the at least one processor performs the method according to any one of the first aspect or the designs of the first aspect.

It should be noted that, for technical effect brought by any one of the designs of the second aspect to the sixth aspect, refer to technical effect brought by a corresponding design of the first aspect. Details are not described herein again.

### BRIEF DESCRIPTION OF DRAWINGS

FIG. 1 is a diagram of a call scenario according to an embodiment of this application;
FIG. 2 is a diagram of a structure of an electronic device according to an embodiment of this application;
FIG. 3 is a diagram of a structure of another electronic device according to an embodiment of this application;
FIG. 4 is a diagram of a software structure of an electronic device according to an embodiment of this application;
FIG. 5 is a diagram 1 of an interface according to an embodiment of this application;
FIG. 6(1) to FIG. 6(4) are a diagram 2 of an interface according to an embodiment of this application;
FIG. 7 is a diagram of a scenario in which a proximity light status is a close state according to an embodiment of this application;
FIG. 8 is a schematic flowchart of a display control method according to an embodiment of this application;
FIG. 9(1) and FIG. 9(2) are a scenario diagram of a proximity light status according to an embodiment of this application;
FIG. 10(1) and FIG. 10(2) are another scenario diagram of a proximity light status according to an embodiment of this application;
FIG. 11 is a diagram of a structure of an electronic device according to an embodiment of this application; and
FIG. 12 is a diagram of a structure of a chip system according to an embodiment of this application.

### DESCRIPTION OF EMBODIMENTS

The following describes technical solutions in embodiments in this application in detail with reference to accompanying drawings.

Terms "including", "having", and any other variant thereof mentioned in descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

It should be noted that, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. To be precise, the word such as "example" or "for example" is intended to present a related concept in a specific manner.

In the descriptions of this application, unless otherwise specified, "a plurality of" means two or more than two. A term "and/or" in this specification describes only an association relationship between associated objects and indicates that there may be three relationships. For example, A and/or B may represent the following three cases: Only A exists, both A and B exist, and only B exists.

In embodiments of this application, "close" and "far" are used to represent a location of an object relative to an electronic device. In some examples, when a distance between the object and the electronic device is less than or equal to a preset distance, it may be described as the object being close to the electronic device. When the distance between the object and the electronic device is greater than the preset distance, it may be described as the object being far away from the electronic device. For example, the preset distance is 5 centimeters, and the distance between the object and the electronic device is 2 centimeters, 3 centimeters, 4 centimeters, or the like, which may be described as that the object is close to the electronic device. The distance between the object and the electronic device is 6 centimeters, 7 centimeters, 8 centimeters, or the like, which may be described as that the object is far away from the electronic device.

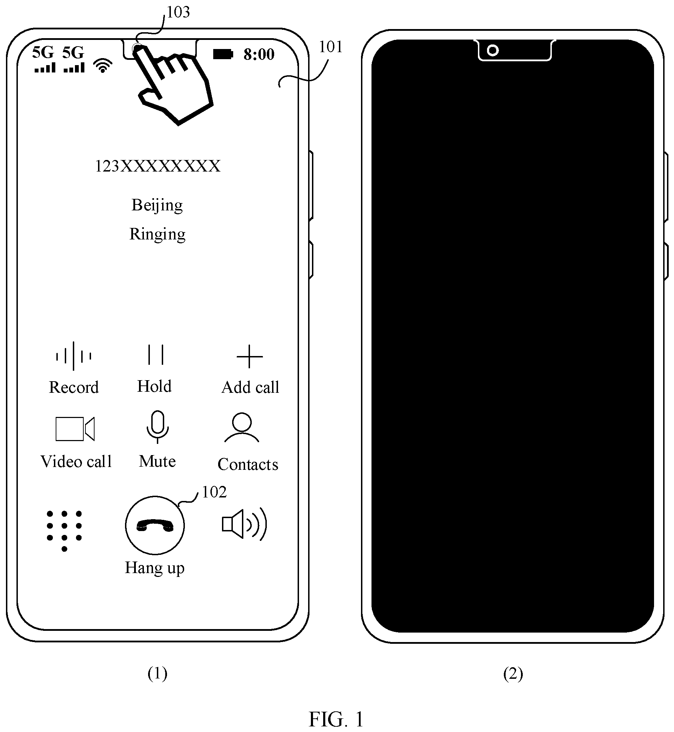

Currently, when a mobile phone is in a call scenario, due to a proximity light detection mechanism of the mobile phone, when a front-facing camera of the mobile phone is blocked by a finger or the like, screen-off of the mobile phone is easily triggered, that is, a display is turned off. For example, as shown in (1) in FIG. 1, the mobile phone displays a call interface 101. Optionally, the call interface 101 includes a dialed number (or referred to as a called number) such as "123XXXXXXXX", a number home location such as "Beijing", a hang-up button 102, and one or more other function buttons such as Record, Hold, Add call, and Mute. Details are not described herein by using examples.

In a call scenario shown in (1) in FIG. 1, the mobile phone starts an optical proximity sensor to detect whether the mobile phone is close to a user. When it is detected that the mobile phone is close to the user, the mobile phone immediately turns off a screen, to avoid an accidental touch on the screen of the mobile phone and ensure a normal call. In the call scenario, when the user wants to pull down a control center, a notification bar, or the like, a top (for example, a front-facing camera) of the mobile phone may be blocked by a finger of the user. In this case, due to a proximity light detection mechanism of the mobile phone, screen-off of the mobile phone is immediately triggered. For example, as shown in (1) in FIG. 1, a front-facing camera 103 of the mobile phone is blocked by a finger of the user. It may be understood that the front-facing camera may be blocked by behavior such as the finger floating above the front-facing camera, or the finger pressing the front-facing camera. In response to the operation, as shown in (2) in FIG. 1, the mobile phone immediately turns off the screen. This makes it difficult to pull down the control center, the notification bar, or the like, which brings inconvenience to the user.

Based on this, embodiments of this application provide a display control method, to resolve a problem in a call scenario that screen-off of a mobile phone is easily triggered when a front-facing camera of the mobile phone is blocked. A time for screen-off of the mobile phone is delayed, so that a user has sufficient time to pull down a control center or the like, thereby bringing convenience to the user. Technical solutions provided in embodiments of this application may be applied to various call scenarios, including but not limited to a scenario in which a voice call is made by using a social application, a conference application, a MeeTime application, or the like, and a scenario in which a common call is made by using a system call application of a mobile phone.

It may be understood that, the call scenario is used as an example in embodiments of this application. The technical solutions are also applicable to another scenario in which a device is blocked and a display needs to be turned off.

The technical solutions provided in embodiments of this application may be applied to an electronic device, or may be applied to a system including an electronic device.

For example, the electronic device may be a mobile phone, a tablet computer, a handheld computer, a netbook, a personal digital assistant (personal digital assistant, PDA), an augmented reality (augmented reality, AR) device, a virtual reality (virtual reality, VR) device, an artificial intelligence (artificial intelligence, AI) device, or a wearable device. The wearable device includes but is not limited to a smartwatch, a smart band, a smart foot ring, or the like. An operating system installed on the electronic device includes but is not limited to iOS^{®}, Android^{®}, HarmonyOS^{®}, Windows^{®}, Linux^{®}, or another operating system. A specific type of the electronic device and the operating system installed in the electronic device are not limited in this application.

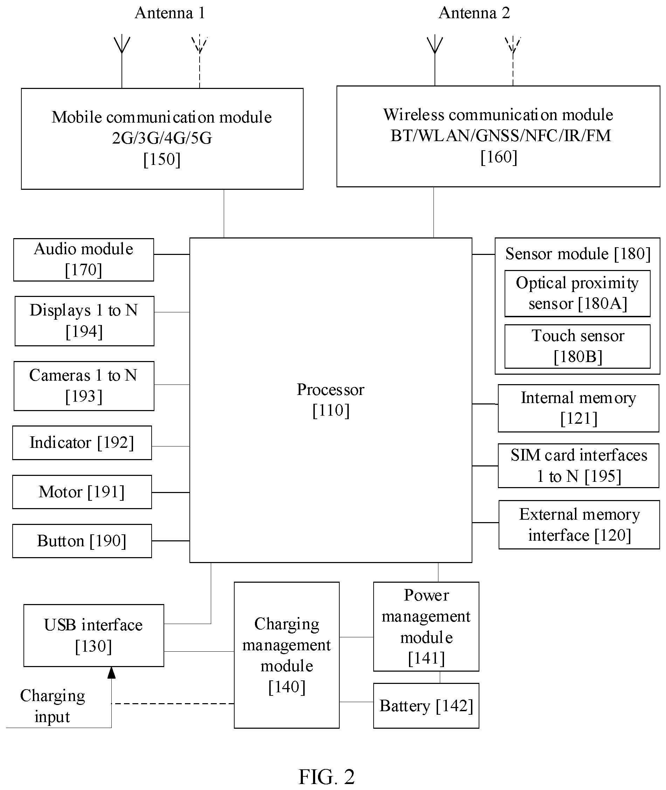

For example, the electronic device is a mobile phone. FIG. 2 is a diagram of a structure of a mobile phone according to an embodiment of this application.

As shown in FIG. 2, the mobile phone may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a sensor module 180, a button 190, a motor 191, an indicator 192, a camera 193, a display 194, a subscriber identity module (subscriber identity module, SIM) card interface 195, and the like. The sensor module 180 includes an optical proximity sensor 180A, a touch sensor 180B, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction fetching and instruction execution.

The processor 110 may be further provided with a memory for storing instructions and data. In some embodiments, the memory in the processor 110 is a cache memory. The memory may store instructions or data just used or repeatedly used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces.

The charging management module 140 is configured to receive a charging input from a charger. The charger may be a wireless charger or a wired charger.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like.

A wireless communication function of the mobile phone may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the mobile phone may be configured to cover one or more communication frequency bands. Different antennas may be further reused to improve antenna utilization. For example, the antenna 1 may be reused as a diversity antenna of a wireless local area network. In some other embodiments, the antenna may be used in combination with a tuning switch.

The mobile communication module 150 can provide a solution, applied to the mobile phone, to wireless communication including 2G, 3G, 4G, 5G, and the like. The mobile communication module 150 may include at least one filter, a switch, a power amplifier, a low noise amplifier (low noise amplifier, LNA), and the like.

The wireless communication module 160 may provide a solution, applied to the mobile phone, for wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), and an infrared (infrared, IR) technology.

In some embodiments, the antenna 1 and the mobile communication module 150 in the mobile phone are coupled, and the antenna 2 and the wireless communication module 160 in the mobile phone are coupled, so that the mobile phone can communicate with a network and another device by using a wireless communication technology.

The mobile phone implements a display function by using the GPU, a display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD). In some embodiments, the mobile phone may include one or N displays 194, where N is a positive integer greater than 1. In some embodiments of this application, the display may be turned on, that is, the display is turned on. In some other embodiments of this application, the display may be turned off.

The camera 193 is configured to capture a static image or a video. In some embodiments, the mobile phone may include one or N cameras 193, where N is a positive integer greater than 1. In some embodiments of this application, the camera 193 includes a front-facing camera, and the front-facing camera is a camera disposed on a same side as the display 194 of the mobile phone.

The external memory interface 120 may be configured to be connected to an external storage card, for example, a micro SD card, to extend a storage capability of the mobile phone. The external memory card communicates with the processor 110 through the external memory interface 120, to implement a data storage function.

The internal memory 121 may be configured to store computer-executable program code. The executable program code includes instructions. The internal memory 121 may include a program storage area and a data storage area.

The audio module 170 is configured to convert digital audio information into an analog audio signal for output, and is also configured to convert analog audio input into a digital audio signal. The mobile phone may use the audio module 170 for music playing, recording, or the like. The audio module 170 may include a speaker, a receiver, a microphone, a headset jack, an application processor, and the like.

The optical proximity sensor 180A may include, for example, a light emitting diode (LED) and an optical detector, for example, a photodiode. The light emitting diode may be an infrared light-emitting diode. In some embodiments of this application, the mobile phone emits infrared light by using the light emitting diode. The mobile phone detects infrared reflected light from a nearby object by using the photodiode. When sufficient reflected light is detected, it may be determined that there is an object near the mobile phone. When insufficient reflected light is detected, the mobile phone may determine that there is no object near the mobile phone. The mobile phone may detect, by using the optical proximity sensor 180A, that the user holds the mobile phone close to an ear for a call, to automatically turn off the screen (that is, screen-off) to save power, or to avoid an accidental touch on the screen. The optical proximity sensor 180A may also be used in a smart cover mode or a pocket mode to automatically perform screen unlocking or locking. In some embodiments of this application, the optical proximity sensor 180A may be disposed at a position adjacent to the front-facing camera.

The touch sensor 180B is also referred to as a "touch device". The touch sensor 180K may be disposed on the display 194. The touch sensor 180K and the display 194 constitute a touchscreen, which is also referred to as a "touch screen". The touch sensor 180K is configured to detect a touch operation performed on or near the touch sensor 180K. The touch sensor may transfer the detected touch operation to the application processor to determine a type of the touch event. A visual output related to the touch operation may be provided through the display 194. In some other embodiments, the touch sensor 180K may alternatively be disposed on a surface of the electronic device at a position different from that of the display 194.

Optionally, the sensor module 180 may further include one or more of a pressure sensor, a gyroscope sensor, a barometric pressure sensor, a magnetic sensor, an acceleration sensor, a distance sensor, a fingerprint sensor, a temperature sensor, an ambient light sensor, a bone conduction sensor, or the like.

The button 190 includes a power button, a volume button, and the like. The button 190 may be a mechanical button, or may be a touch button.

The motor 191 may generate vibration alerts.

The indicator 192 may be an indicator lamp, and may be configured to indicate a charging state and a power change, or and may also be configured to indicate a message, a missed call, a notification, and the like.

The SIM card interface 195 is configured to connect to a SIM card.

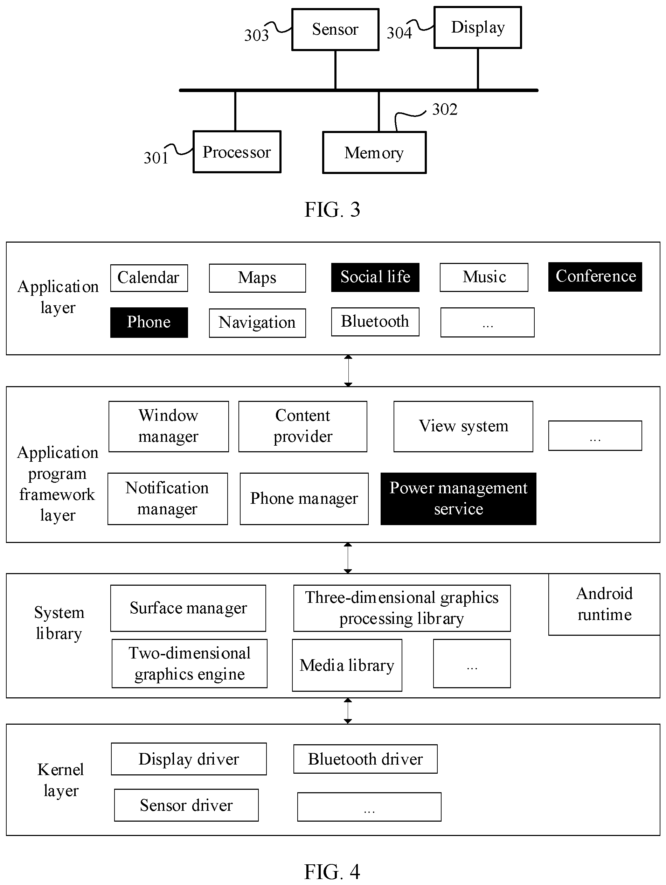

For example, the foregoing merely uses the mobile phone as an example to describe a structure of the electronic device in embodiments of this application, but does not constitute a limitation on a structure and a form of the electronic device. The structure and the form of the electronic device are not limited in embodiments of this application. For example, FIG. 3 shows another example structure of the electronic device. As shown in FIG. 3, the electronic device includes a processor 301, a memory 302, a sensor 303, and a display 304. For implementation of the processor 301, the memory 302, the sensor 303, and the display 304, refer to implementation of the processor, the memory, the sensor, and the display shown in FIG. 2.

It may be understood that a structure shown in this embodiment of this application does not constitute a specific limitation on the mobile phone. In some other embodiments of this application, the mobile phone may include more or fewer components than those shown in FIG. 2 and FIG. 3, or combine some components, or split some components, or have a different component arrangement. The components shown in the figures may be implemented by hardware, software, or a combination of software and hardware.

In some embodiments, a software system of the electronic device may use a layered architecture, an event-driven architecture, a microkernel architecture, a micro service architecture, or a cloud architecture. In embodiments of the present invention, an Android system with a layered architecture is used as an example to illustrate the software structure of the electronic device.

FIG. 4 is a block diagram of a software structure of an electronic device according to an embodiment of this application.

In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 4, the application packages may include applications such as Calendar, Phone, Maps, Navigation, Bluetooth, Social life, Music, and Conference. Optionally, an application such as Phone, Social life, or Conference may have a call function, and can implement the call scenario described in embodiments of this application. In some embodiments of this application, in a call scenario, an application such as Phone, Social life, or Conference applies for "wake_lock" (or referred to as "lock"), so that the application does not enter a sleep state. It may be understood that "wake_lock" is a lock mechanism, and may be used to prevent a system of the electronic device from entering a sleep state. Provided that there is an application holding "wake_lock", the system of the electronic device cannot enter the sleep state.

The application framework layer provides an application programming interface (application programming interface, API) and a programming framework for an application at the application layer. The application framework layer includes some predefined functions.

As shown in FIG. 4, the application framework layer may include a window manager, a content provider, a view system, a phone manager, a notification manager, a power management service, and the like.

The window manager is configured to manage a window program.

The content provider is configured to: store and obtain data, and enable the data to be accessed by an application program.

The view system includes visual controls such as a control for displaying a text and a control for displaying an image.

The phone manager is configured to provide a communication function of the electronic device, for example, management of a call status (including answering, declining, or the like).

The notification manager enables an application to display notification information in a status bar, and may be used to convey a message of a notification type that may automatically disappear after a short stay without user interaction.

The power management service is a core service of power management of the electronic device. For example, the power management service may be specifically configured to control a standby state of the system, control a switch of the display, adjust luminance, and the like. In some embodiments of this application, the power management service may be configured to monitor a proximity light status based on a signal collected by the optical proximity sensor, and control, based on the proximity light status, to turn on a screen, turn off a screen, or the like. For example, when it is determined that the proximity light status changes, and the proximity light status is a close state, control of screen-off is delayed for preset duration.

The Android runtime includes a core library and a virtual machine. The Android runtime is responsible for scheduling and management of the Android system.

The core library includes two parts: a function that needs to be called in Java language and a core library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a sensor driver, and a Bluetooth driver.

It may be understood that the layer division and the modules included in the layers shown in FIG. 4 are merely examples for description, and do not constitute a limitation on this application. In actual application, there may be another division manner, and the modules may alternatively be located at different layers. For example, the power management service may also be located at an application layer.

The following describes an example of a working procedure of software and hardware of the electronic device with reference to a call scenario. When the touch sensor 180B receives a touch operation, a corresponding hardware interrupt is sent to the kernel layer. The kernel layer processes the touch operation into an original input event (including information such as touch coordinates and a timestamp of the touch operation). The original input event is stored at the kernel layer. The application framework layer obtains the original input event from the kernel layer, and identifies a control corresponding to the input event.

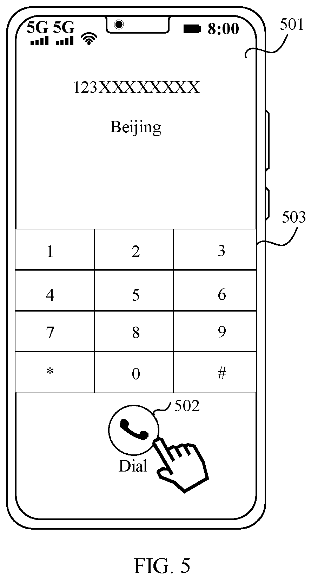

For example, the touch operation is a touch tap operation, and a control corresponding to the touch tap operation is a dialing control 502 in a dialing interface 501 shown in FIG. 5. In response to the touch tap operation on the dialing control 502, the call application invokes an interface of the application framework layer to dial the number "123XXXXXXXX". For example, in response to the dialing operation, the electronic device may present the call interface 101 shown in (1) in FIG. 1. Optionally, the number "123XXXXXXXX" may be entered by using the keyboard 503, or may be stored in Contacts.

Further, the call application invokes the sensor driver at the kernel layer to start the optical proximity sensor to collect a signal, and starts the power management service at the application framework layer to monitor the proximity light status based on the signal collected by the optical proximity sensor. The signal collected by the optical proximity sensor may be transferred to the power management service at the application framework layer through the kernel layer. The power management service may determine the proximity light status based on the signal, and then perform, based on the proximity light status, an operation of turning on the screen or delaying, for preset duration, turning off the screen. For example, when it is determined that the proximity light status changes and the proximity light status is a far state, the screen is controlled to be on. When it is determined that the proximity light status changes, and the proximity light status is a close state, control of screen-off is delayed for preset duration.

It may be understood that in this embodiment, an example in which the power management service at the application framework layer delays control of screen-off for the preset duration is used. In another embodiment, another layer (for example, the kernel layer, the system layer, or the application layer) may perform the operation of delaying, for the preset duration, control of screen-off. This is not specifically limited in this application.

All technical solutions in the following embodiments may be implemented in a device having the structures shown in FIG. 2, FIG. 3, and FIG. 4.

With reference to the accompanying drawings, the following describes the technical solutions provided in embodiments of this application by using an example in which the electronic device is a mobile phone. It may be understood that a call scenario is used as an example in the technical solutions provided in embodiments of this application.

An embodiment of this application provides a display control method. When a mobile phone is in a call scenario, an operation of turning on a screen or delaying screen-off for preset duration is performed based on an obtained proximity light signal.

The following first describes the call scenario.

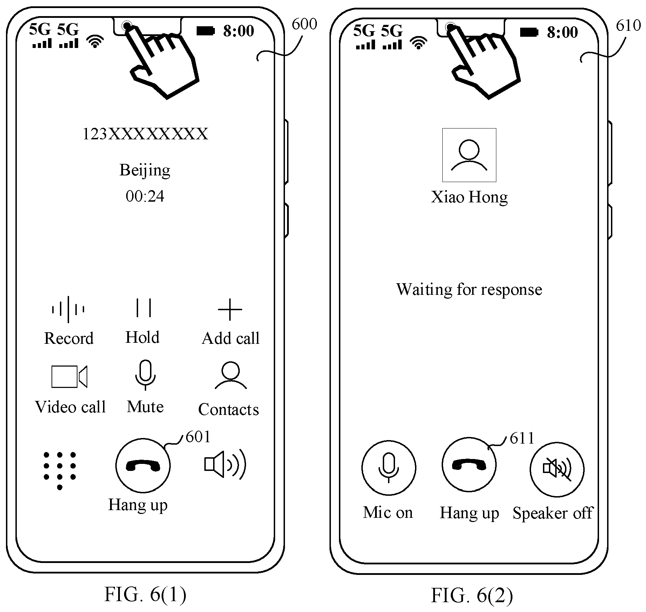

In some examples, the call scenario may include one or more of a missed call scenario, an answered call scenario, or the like. The missed call scenario may refer to a scenario in which a number is dialed but a called party does not answer the call. For example, the call interface 101 shown in (1) in FIG. 1 is a missed call scenario. The answered call scenario may refer to a scenario in which the called party has answered the call. For example, FIG. 6(1) is a diagram of an interface in an answered call scenario according to an embodiment of this application. For example, as shown in FIG. 6(1), a call interface 600 includes an incoming call number or a called number such as " 123XXXXXXXX", call duration such as "00:24", a number home location such as "Beijing", a hang-up button 601, and one or more other function buttons such as Record, Hold, Add call, and Mute. Details are not described herein by using examples.

In some other examples, the call scenario may include one or more of a common call scenario, a voice call scenario, a network call scenario, or the like. The common call scenario may refer to a scenario in which a call is made by using a system call application in a mobile phone and a mobile phone number, that is, a scenario in which a call is made by using a SIM card installed in the mobile phone. The common call scenario does not need to consume network traffic. For example, both (1) in FIG. 1 and in FIG. 6(1) are diagrams of interfaces in a common call scenario according to an embodiment of this application.

The voice call scenario may refer to a scenario in which a voice call is made by using a social application, a conference application, or the like. The voice call scenario needs to consume network traffic. For example, in the voice call scenario, a call may be implemented by using a social application, a conference application, or the like in the mobile phone and an application account. The social application is used as an example. FIG. 6(2) is a diagram of an interface of a voice call scenario according to an embodiment of this application. As shown in FIG. 6(2), a call interface 610 includes a dialed account such as "Xiao Hong", a hang-up button 611, and one or more other function buttons such as a speaker or a microphone. Details are not described herein again.

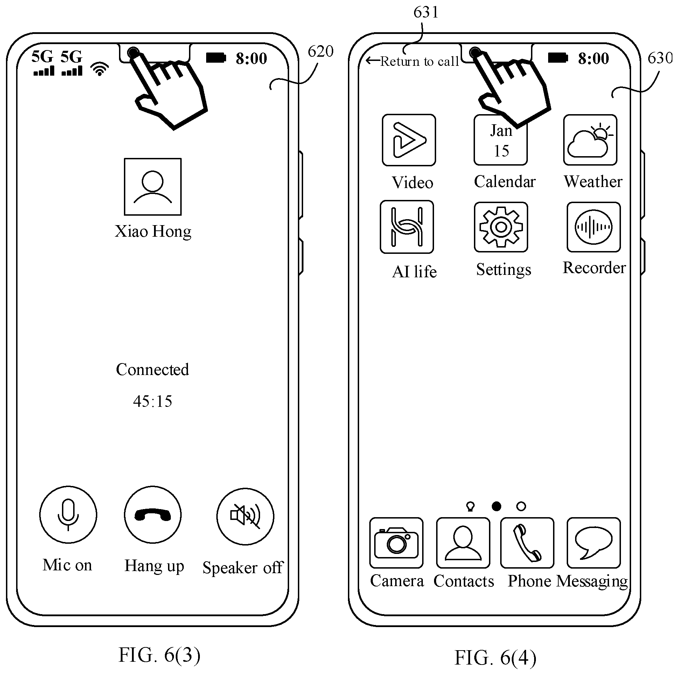

It may be understood that a missed call scenario is used as an example in FIG. 6(2). The answered call scenario is used as an example. FIG. 6(3) is a diagram of an interface of another voice call scenario according to an embodiment of this application. As shown in FIG. 6(3), a call interface 620 may further include call duration of "45:15", or the like. For descriptions of other controls on an interface shown in FIG. 6(3), refer to the descriptions of corresponding controls in FIG. 6(2). Details are not described herein again.

The network call scenario may refer to a scenario in which a network call is made by using network call software in the mobile phone and a phone number, that is, a scenario in which a call is made by using the Internet and the phone number. A difference between the network call scenario and the common call scenario is as follows: A network cannot be used in the common call scenario, but can be used in the network call scenario. A difference between the network call scenario and the voice call scenario includes the following: In the network call scenario, a call is made by using a phone number, but in the voice call scenario, a call cannot be made by using a phone number.

It may be understood that the foregoing call scenarios are merely example description for ease of understanding of this application. The call scenario in this embodiment of this application may be a scenario in which two or more parties engage a call by using any software. This is not specifically limited in this application.

It may be further understood that, when the mobile phone is in a call scenario, an interface currently displayed by the mobile phone may not be a call interface, for example, may be a home screen (or referred to as a desktop), or another interface such as a running interface of another application. For example, FIG. 6(4) is a diagram of another interface displayed by the mobile phone other than a call interface when the mobile phone is in the call scenario. For example, the another interface is a home screen. As shown in FIG. 6(4), the mobile phone displays a home screen 630. The home screen 630 may include a button 631 for tapping to return to a call. By performing an operation such as tapping on the button 631, the mobile phone may return to the call interface shown in (1) in FIG. 1, FIG. 6(1), FIG. 6(2), FIG. 6(3), or the like.

Optionally, the home screen 630 includes one or more application icons, such as a calendar application icon and a weather application icon. Details are not described herein by using examples. Icons of different applications may be used to open running interfaces of the corresponding applications, to implement functions of the corresponding applications.

In some embodiments, after an application installed in the mobile phone enables a call function, it is determined that the mobile phone is in a call scenario. In other words, after enabling a function of a corresponding scenario, the mobile phone is in the scenario. Optionally, there may be one or more applications that are installed in the mobile phone and have a call function, such as a system call application, a conference application, a MeeTime application, or a social application. Further, the mobile phone may obtain a proximity light signal. For example, the mobile phone may collect the proximity light signal in real time or periodically by using an optical proximity sensor or the like. A specific manner of obtaining the proximity light signal by the mobile phone is not limited in this embodiment of this application.

In some embodiments, the mobile phone may determine a proximity light status according to the obtained proximity light signal. In some embodiments, the proximity light status includes a close state and a far state. The close state may be used to indicate that an object is close to the mobile phone. In the close state, the mobile phone may be blocked by the object. The far state may be used to indicate that an object is far away from the mobile phone. In the far state, the mobile phone may not be blocked by the object.

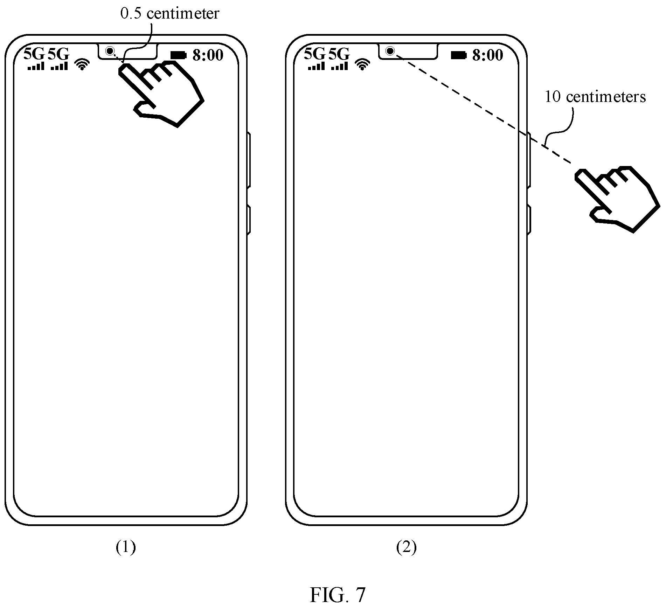

In some embodiments, the close state may be a state in which a distance between a front-facing camera (or a display, or a mobile phone) of the mobile phone and an object is less than or equal to a preset distance. For example, the preset distance may be 1 centimeter, 2 centimeters, or the like. A specific value of the preset distance may be set by a developer according to an actual requirement. For example, the preset distance is 2 centimeters. (1) in FIG. 7 is a diagram of a scenario in which the proximity light status is a close state according to an embodiment of this application.

In some embodiments, the far state may be a state in which a distance between the front-facing camera (or the display) of the mobile phone and an object is greater than the preset distance. The preset distance being 2 centimeters is still used as an example. (2) in FIG. 7 is a diagram of a scenario in which the proximity light status is a far state according to an embodiment of this application.

In some embodiments, the mobile phone may perform, based on the status of the display and the proximity light status, an operation of turning on the screen or delaying, for preset duration, turning off the screen. For example, the status of the display may include a screen-on state and a screen-off state.

In this embodiment, in a possible implementation, if the mobile phone is in the screen-on state, and the mobile phone determines that a current proximity light status is a close state, the mobile phone delays screen-off for the preset duration. Based on this solution, when the screen of the mobile phone is on, if the proximity light status is a close state, the screen is turned off after a delay of the preset duration. This enables a user to have sufficient time to pull down a control center, a notification bar, or the like, thereby bringing convenience to the user.

Optionally, in this implementation, after the mobile phone performs a delay for the preset duration, the mobile phone may further obtain a proximity light status obtained after the preset duration is delayed. If the proximity light status is still the close state, the mobile phone may immediately turn off the screen. If the proximity light status is the far state, the mobile phone may keep the screen on. Optionally, in a scenario in which the mobile phone keeps the screen on, when delay processing logic (or referred to as a delay processing task) already exists in the mobile phone, the mobile phone may further remove the delay processing logic, that is, the foregoing logic (or referred to as the task) for delaying screen-off for the preset duration. In other words, the mobile phone does not execute the delay processing logic, to immediately turn on the screen. Based on this solution, after the mobile phone performs a delay for the preset duration and before the screen is turned off, the mobile phone re-confirms whether the current proximity light status is the close state, and turns off the screen only when the current proximity light status is the close state. In this way, power is saved and an accidental touch on the screen is avoided. When the mobile phone is in the far state, the screen is turned on, so that the user can operate the mobile phone conveniently.

In another possible implementation, if the mobile phone is in the screen-off state, and the mobile phone determines that the current proximity light status is the far state, the mobile phone immediately turns on the screen. Based on this solution, when the screen of the mobile phone is turned off, if the proximity light status is the far state, the screen is immediately turned on, so that the user can operate the mobile phone conveniently.

In still another possible implementation, if the mobile phone is in the screen-on state, and the mobile phone determines that the current proximity light status is the far state, the mobile phone keeps the screen on. Based on this solution, when the screen of the mobile phone is on, if the proximity light status is the far state, the screen is still kept on, so that the user can operate the mobile phone conveniently. Optionally, in this implementation and the foregoing implementation, if there is delay processing logic in the mobile phone, the mobile phone may also remove the delay processing logic, to immediately turn on the screen.

In still another possible implementation, if the mobile phone is in the screen-off state, and the mobile phone determines that the current proximity light status is the close state, the mobile phone keeps the screen off. Based on this solution, when the screen of the mobile phone is turned off, if the proximity light status is the close state, the screen is still kept off, so that power can be saved and an accidental touch on the screen is avoided.

In some other embodiments, the mobile phone may perform, based on a change of the proximity light status, an operation of turning on the screen or delaying screen-off for preset duration.

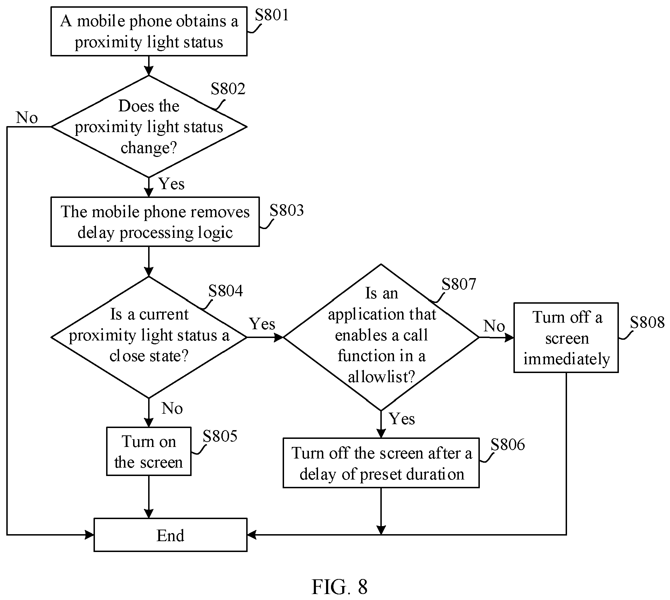

For example, in this embodiment, in a specific implementation, FIG. 8 is a schematic flowchart of a display control method according to an embodiment of this application.

It may be understood that, in embodiments of this application, the mobile phone may perform some or all of the steps in embodiments of this application. These steps or operations are merely examples. Other operations or variations of various operations may be further performed in embodiments of this application. In addition, the steps may be performed in a sequence different from that shown in embodiments of this application, and possibly, not all the operations in embodiments of this application need to be performed.

As shown in FIG. 8, the display control method includes the following steps.

S801: A mobile phone obtains a proximity light status.

Optionally, the proximity light status may be at least one of a current proximity light status or a previous proximity light status.

For example, the mobile phone may determine the proximity light status by using a collected proximity light signal. Alternatively, the mobile phone may send the collected proximity light signal to another device, and the another device determines the proximity light status according to the proximity light signal, so that the mobile phone may obtain the proximity light status from the another device.

Optionally, the mobile phone may obtain the proximity light status in real time or periodically.

S802: The mobile phone determines whether the proximity light status changes.

It may be understood that whether the proximity light status changes may refer to whether the current proximity light status changes compared with a previous proximity light status.

In some embodiments, the mobile phone may determine, based on the current proximity light status and the previous proximity light status, whether the proximity light status changes.

In some other embodiments, when the proximity light status is a close state, the mobile phone is in a screen-off state. When the proximity light status is a far state, the mobile phone is in a screen-on state. Therefore, the mobile phone may determine, based on a status (for example, the screen-on state or the screen-off state) of a display and the current proximity light status, whether the proximity light status changes.

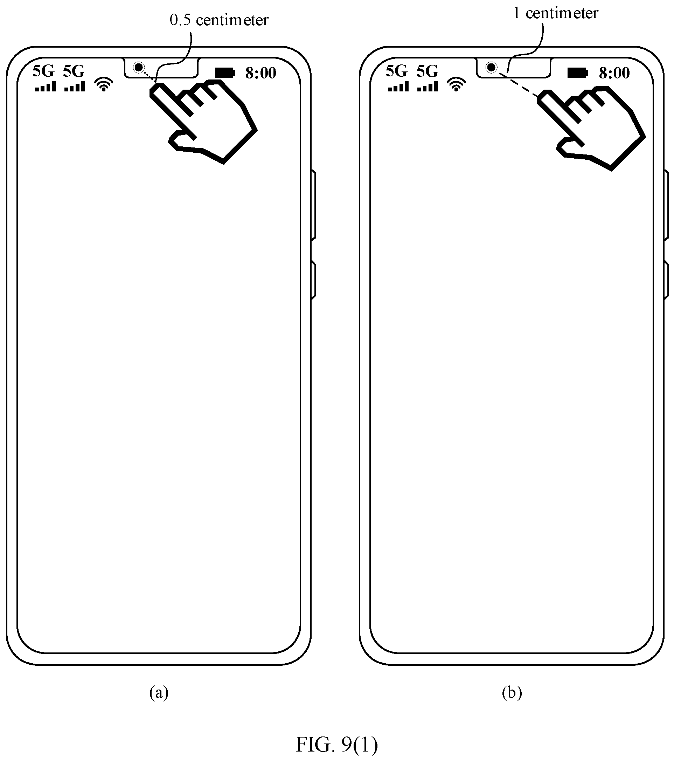

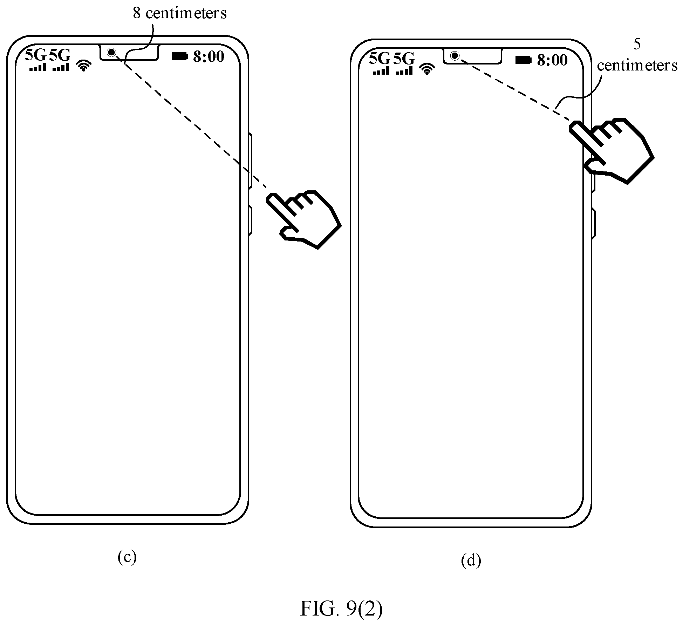

It is assumed that the proximity light status does not change, for example, both the current proximity light status and the previous proximity light status are close states. A preset distance being 2 centimeters is still used as an example. A figure (a) shown in FIG. 9(1) is a diagram of a scenario of a current proximity light status. As shown in the figure (a) in FIG. 9(1), a distance between a front-facing camera of the mobile phone and a finger is 0.5 centimeter, which is less than the preset distance. In this case, the current proximity light status is a close state. A figure (b) shown in FIG. 9(2) is a diagram of a scenario of a previous proximity light status. As shown in the figure (b) in FIG. 9(1), the distance between the front-facing camera of the mobile phone and the finger is 1 centimeter, which is less than the preset distance. In this case, the previous proximity light status is also a close state.

It may be understood that, when both the current proximity light status and the previous proximity light status are close states, in the current proximity light status, a distance between an object and the front-facing camera (or the display) of the mobile phone may be greater than, or less than (this is used as an example in FIG. 9(1)), or equal to the distance between the object and the front-facing camera (or the display) of the mobile phone in the previous proximity light status.

Alternatively, both the current proximity light status and the previous proximity light status are far states. The preset distance being 2 centimeters is still used as an example. A figure (c) shown in FIG. 9(2) is a diagram of a scenario of a current proximity light status. As shown in the figure (c) in FIG. 9(2), the distance between the front-facing camera of the mobile phone and the finger is 8 centimeters, which is greater than the preset distance. In this case, the current proximity light status is a far state. A figure (d) shown in FIG. 9(2) is a diagram of a scenario of a previous proximity light status. As shown in the figure (d) in FIG. 9(2), the distance between the front-facing camera of the mobile phone and the finger is 5 centimeters, which is greater than the preset distance. In this case, the previous proximity light status is also a far state.

It may be understood that, when both the current proximity light status and the previous proximity light status are far states, in the current proximity light status, a distance between an object and the front-facing camera (or the display) of the mobile phone may be greater than (this is used as an example in FIG. 9(2)), or less than, or equal to the distance between the object and the front-facing camera (or the display) of the mobile phone in the previous proximity light status.

In this case, the process ends, that is, the mobile phone does not perform processing. For example, if the previous proximity light status is the close state, and a screen of the mobile phone is off, when the current proximity light status is also the close state, the mobile phone may keep the screen off without performing processing. For another example, if the previous proximity light status is the far state, and the screen of the mobile phone is on, when the current proximity light status is also the far state, the mobile phone may keep the screen on without performing processing.

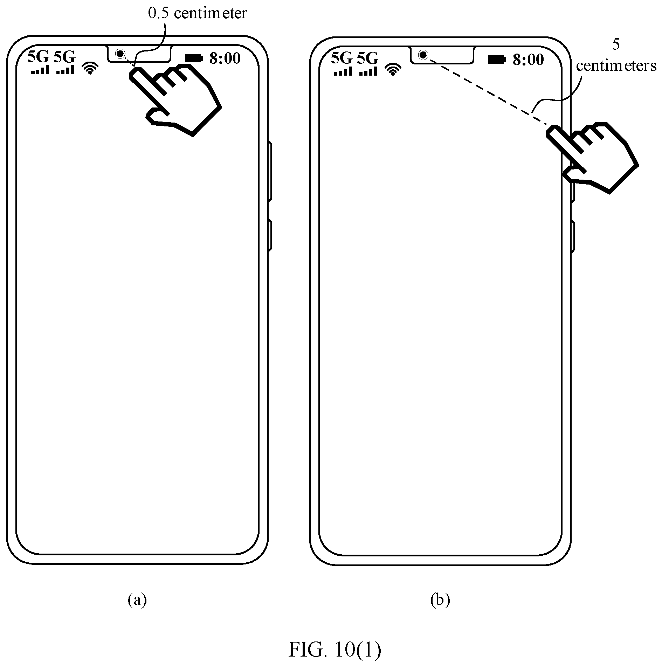

If there is a change, for example, the current proximity light status is a close state, and the previous proximity light status is a far state, it indicates that the proximity light status changes. The preset distance being 2 centimeters is still used as an example. A figure (a) shown in FIG. 10(1) is a diagram of a scenario of a current proximity light status. As shown in the figure (a) in FIG. 10(1), a distance between the front-facing camera of the mobile phone and a finger is 0.5 centimeter, which is less than the preset distance. In this case, the current proximity light status is a close state. A figure (b) shown in FIG. 10(1) is a diagram of a scenario of a previous proximity light status. As shown in the figure (b) in FIG. 10(1), the distance between the front-facing camera of the mobile phone and the finger is 5 centimeters, which is greater than the preset distance. In this case, the previous proximity light status is a far state.

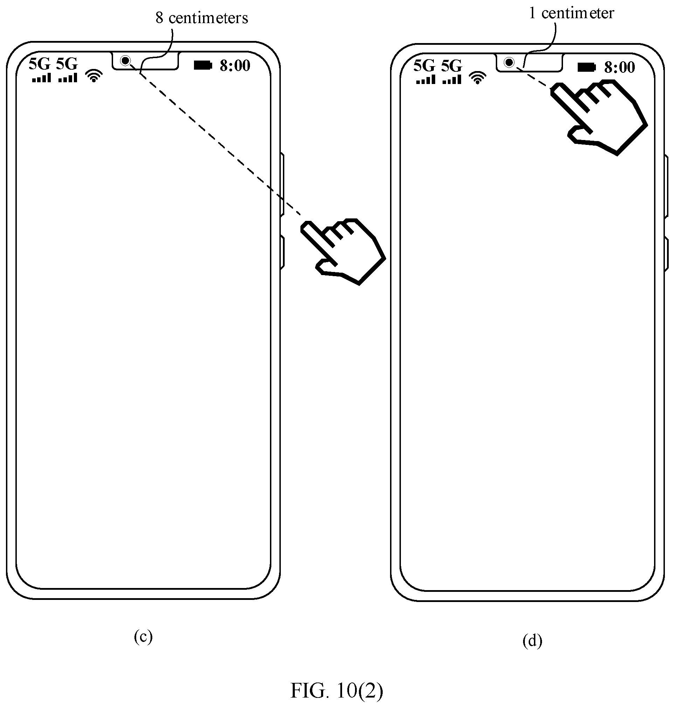

For another example, if the current proximity light status is a far state, and the previous proximity light status is a close state, it indicates that the proximity light status changes. The preset distance being 2 centimeters is still used as an example. A figure (c) shown in FIG. 10(2) is a diagram of a scenario of a current proximity light status. As shown in the figure (c) in FIG. 10(2), the distance between the front-facing camera of the mobile phone and the finger is 8 centimeters, which is greater than the preset distance. In this case, the current proximity light status is a far state. A figure (d) shown in FIG. 10(2) is a diagram of a scenario of a previous proximity light status. As shown in the figure (d) in FIG. 10(2), the distance between the front-facing camera of the mobile phone and the finger is 1 centimeter, which is less than the preset distance. In this case, the previous proximity light status is a close state.

In this case, step S803 is performed.

S803: The mobile phone removes (or deletes) delay processing logic.

It may be understood that, in this embodiment of this application, the delay processing logic may be logic of delaying the screen-off for preset duration.

In some scenarios, there may be no delay processing logic in the mobile phone. For example, when the proximity light status of the mobile phone changes from the far state to the close state for the first time, there is no delay processing logic in the mobile phone.

In some other scenarios, there may be delay processing logic in the mobile phone. For example, when the proximity light status of the mobile phone changes from the close state to the far state, there is delay processing logic in the mobile phone.

Optionally, the mobile phone may perform step S803, or may not perform step S803. When the mobile phone performs step S803, step S803 may be performed before step S802. An occasion for performing step S803 by the mobile phone is not limited in this embodiment of this application.

Based on this step, when subsequently performing a screen-on operation, the mobile phone can immediately turn on the screen.

S804: The mobile phone determines whether the current proximity light status is the close state.

If the current proximity light status is not the close state, that is, the far state, step S805 is performed. If the current proximity light status is the close state, step S806 is performed.

Optionally, the mobile phone may first perform step S803, or may first perform step S804.

Optionally, the foregoing step S802 and step S803 may alternatively be implemented as another step: for example, determining whether the proximity light status changes from the far state to the close state. If it is determined that the proximity light status changes from the far state to the close state, step S806 is performed. If it is determined that the proximity light status does not change from the far state to the close state, it may be further determined whether the proximity light status changes from the close state to the far state. If the proximity light status changes from the close state to the far state, step S805 is performed. If the proximity light status does not change from the close state to the far state, it may be further determined whether the proximity light status does not change. If the proximity light status does not change, the process ends, that is, no processing is performed. It may be understood that an execution sequence of the three determining steps in this example is not limited in this application.

S805: Turn on the screen.

In some embodiments, before the mobile phone performs step S805, the mobile phone is in the screen-off state.

In some embodiments, the mobile phone may immediately turn on the screen. In some other embodiments, the mobile phone may alternatively delay screen-on for preset duration. This is not specifically limited in this application. For example, the mobile phone may restore a screen-off interface shown in (2) in FIG. 1 to a call interface 101 shown in (1) in FIG. 1.

S806: Turn off the screen after a delay of the preset duration.

For example, when an object repeatedly and quickly moves close to and far away from the mobile phone, the proximity light status is quickly and repeatedly switched between the close state and the far state. Therefore, the mobile phone needs to switch between screen-off and screen-on. However, in this application, screen-off is delayed for preset duration. If the preset duration is longer, the proximity light status of the mobile phone may already switch to the far state before screen-off, so that a probability that the mobile phone experiences a momentary black screen is lower. For example, the preset duration may be greater than or equal to 150 ms, greater than or equal to 200 ms, or greater than or equal to 250 ms, but is not limited thereto.

For another example, because screen-off is delayed for the preset duration in this application, shorter preset duration indicates smoother screen-off effect of the mobile phone. This prevents a case that the screen is continuously on, which makes the user perceive freezing of the mobile phone. For example, the preset duration may be less than or equal to 500 ms, less than or equal to 400 ms, or less than or equal to 350 ms, but is not limited thereto.

In a specific example, in consideration of a momentary black screen and smooth effect of screen-off of the mobile phone, the preset duration is greater than or equal to 250 ms and less than or equal to 350 ms. For example, the preset duration may be 300 ms.

Optionally, a specific value of the preset duration may be set by a developer according to an actual requirement.

In some embodiments, before the mobile phone performs step S806, the mobile phone is in the screen-on state. For example, in a call scenario shown by various interfaces in (1) in FIG. 1 and FIG. 6(1) to FIG. 6(4) and the like, when the front-facing camera of the mobile phone is blocked, the mobile phone may turn off the screen after a delay of the preset duration. For example, the mobile phone may present a screen-off interface shown in (2) in FIG. 1.

Optionally, before the mobile phone performs step S806, the mobile phone may further first determine to delay screen-off for the preset duration.

In some embodiments, the proximity light status that is of the mobile phone after and/or within the delay of the preset duration may change. Therefore, before turning off the screen, the mobile phone may further determine whether the proximity light status obtained after the delay of the preset duration is the same as the current proximity light status. If the proximity light status obtained after the delay of the preset duration is the same as the current proximity light status, that is, both are close states, the mobile phone immediately turns off the screen.

If the proximity light status obtained after the delay of the preset duration is different from the current proximity light status, that is, the proximity light status after the delay of the preset duration is the far state, or the proximity light status within the delay of the preset duration is the far state, the mobile phone keeps the screen on. In other words, the mobile phone terminates the operation of delaying screen-off for the preset duration. For example, the operation of delaying screen-off for the preset duration includes an operation of timing the preset duration and an operation of turning off the screen. The termination operation may be performed on various occasions, for example, in a process of timing the preset duration or before performing the operation of turning off the screen. Optionally, in this embodiment, in a scenario in which the mobile phone keeps the screen on, if there is delay processing logic in the mobile phone, the mobile phone may further remove the delay processing logic, namely, the foregoing logic of delaying screen-off for the preset duration, to terminate the operation of delaying screen-off for the preset duration, thereby immediately turning on the screen.

Optionally, in a process of performing the delay for the preset duration, the mobile phone may obtain the proximity light status in real time or periodically, to determine whether the proximity light status is the same as the current proximity light status.

In some embodiments, in a case that the mobile phone performs step S803, before the mobile phone performs step S806, there is no delay processing logic in the mobile phone. Therefore, when performing step S806, the mobile phone may turn off the screen after a delay of the preset duration.

Optionally, the delay processing logic may be generated (or referred to as created) in a process of performing step S806 after the mobile phone determines to delay screen-off for the preset duration.

Based on the foregoing technical solution, when determining that the proximity light status changes and the current proximity light status is the close state, the mobile phone delays screen-off for the preset duration. This enables the user to have sufficient time to pull down a control center, a notification bar, or the like, thereby bringing convenience to the user. In addition, when an object repeatedly and quickly moves close to and far away from the mobile phone, the proximity light status is quickly and repeatedly switched between the close state and the far state. Therefore, the mobile phone needs to switch between screen-off and screen-on. However, in this application, screen-off is delayed for the preset duration. Therefore, the proximity light status of the mobile phone may already switch to the far state before screen-off, so that the mobile phone does not experience a momentary black screen.

In some embodiments, before performing step S806, the mobile phone may further perform step S807.

S807: Determine whether an application that enables a call function is in an allowlist.

If the application that enables the call function is in the allowlist, step S806 is performed. If the application that enables the call function is not in the allowlist, step S808 is performed. It may be understood that the allowlist includes one or more preset applications. When an application belongs to the preset application, step S806 may be performed. When an application does not belong to the preset application, step S808 may be performed.

S808: Turn off the screen immediately.

Based on this solution, only for an application in the allowlist, screen-off is delayed for the preset duration; and for an application outside the allowlist, screen-off is not delayed for the preset duration. This can ensure application security, and improve user experience.

It may be understood that after performing step S805, step S806, or step S808 shown in FIG. 8, the mobile phone may further return to perform the technical solutions provided in embodiments of this application, for example, monitoring whether the mobile phone is in a call scenario, and when the mobile phone is in a call scenario, continue to perform the display control method provided in this embodiment of this application.

It may be further understood that the technical solutions provided in embodiments of this application may be used separately, or may be used in combination without conflict.

The foregoing mainly describes the solutions provided in embodiments of this application from a perspective of the method. It may be understood that, to implement the foregoing functions, the electronic device includes a corresponding hardware structure and/or software module for performing each of the functions. With reference to the units and algorithm steps described in embodiments disclosed in this application, embodiments of this application can be implemented in a form of hardware or a combination of hardware and computer software. Whether a function is performed by hardware or hardware driven by a computer depends on particular applications and design constraints of the technical solutions. A person skilled in the art may use different methods to implement the described functions for each particular application, but it should not be considered that the implementation falls beyond the scope of the technical solutions in embodiments of this application.

In embodiments of this application, the electronic device may be divided into functional modules based on the foregoing method examples. For example, each functional module corresponding to each function may be obtained through division, or two or more functions may be integrated into one processing unit. The integrated unit may be implemented in a form of hardware, or may be implemented in a form of a software functional module. It should be noted that, in this embodiment of this application, division into the units is an example, and is merely a logical function division. In actual implementation, another division manner may be used.

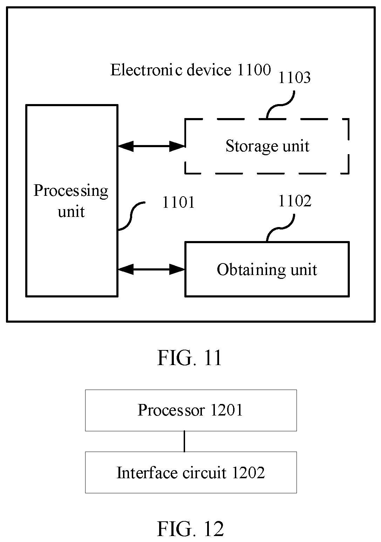

FIG. 11 is a diagram of a structure of an electronic device according to an embodiment of this application. The electronic device 1100 may be configured to implement the method performed by the electronic device described in the foregoing method embodiment. For example, the electronic device 1100 may specifically include a processing unit 1101 and an obtaining unit 1102.

The processing unit 1101 is configured to support the electronic device 1100 in performing steps S802 to S808 in FIG. 8, and/or the processing unit 1101 is further configured to support the electronic device 1100 in performing other steps performed by the electronic device in embodiments of this application.

The obtaining unit 1102 is configured to support the electronic device 1100 in performing step S801 in FIG. 8, and/or the obtaining unit 1102 is further configured to support the electronic device 1100 in performing other steps performed by the electronic device in embodiments of this application.

Optionally, the electronic device 1100 shown in FIG. 11 may further include a display unit (not shown in FIG. 11). The display unit is configured to support the electronic device 1100 in performing various display operations.

Optionally, the electronic device 1100 shown in FIG. 11 may further include a communication unit (not shown in FIG. 11). The communication unit is configured to support the electronic device 1100 in performing steps of communication between the electronic device and another device in embodiments of this application.

Optionally, the electronic device 1100 shown in FIG. 11 may further include a storage unit 1103. The storage unit 1103 stores a program or instructions. When the processing unit 1101 executes the program or the instructions, the electronic device 1100 shown in FIG. 11 is enabled to perform the method shown in the foregoing method embodiment.

For technical effects of the electronic device 1100 shown in FIG. 11, refer to the technical effects of the method shown in FIG. 8. Details are not described herein again. The processing unit 1101 in the electronic device 1100 shown in FIG. 11 may be implemented by a processor or a processor-related circuit component, and may be a processor or a processing module.

An embodiment of this application further provides a chip system. As shown in FIG. 12, the chip system includes at least one processor 1201 and at least one interface circuit 1202. The processor 1201 and the interface circuit 1202 may be connected to each other by using a wire. For example, the interface circuit 1202 may be configured to receive a signal from another apparatus. For another example, the interface circuit 1202 may be configured to send a signal to another apparatus (for example, the processor 1201). For example, the interface circuit 1202 may read instructions stored in a memory, and send the instructions to the processor 1201. When the instructions are executed by the processor 1201, an electronic device is enabled to perform the steps performed by the electronic device in the foregoing embodiments. Certainly, the chip system may further include another discrete component. This is not specifically limited in this embodiment of this application.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a microcontroller unit (microcontroller unit, MCU), a programmable logic device (programmable logic device, PLD), or another integrated chip.

It should be understood that the steps in the foregoing method embodiment may be completed by using an integrated logic circuit of hardware in the processor or instructions in a form of software. The steps of the method disclosed with reference to embodiments of this application may be directly performed by a hardware processor, or may be performed through a combination of hardware in the processor and a software module.

An embodiment of this application further provides a computer storage medium. The computer storage medium stores computer instructions. When the computer instructions are run on an electronic device, the electronic device is enabled to perform the method in the foregoing method embodiment.

An embodiment of this application provides a computer program product. The computer program product includes a computer program or instructions. When the computer program or the instructions are run on a computer, the computer is enabled to perform the method in the foregoing method embodiment.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the apparatus to perform the methods in the foregoing method embodiments.

The electronic device, the computer storage medium, the computer program product, or the chip provided in embodiments is configured to perform the corresponding method provided above. Therefore, for beneficial effect that can be achieved, refer to beneficial effect of the corresponding method provided above. Details are not described herein again.

Based on the descriptions about the foregoing implementations, a person skilled in the art may understand that, for a purpose of convenient and brief description, division into the foregoing functional modules is used as an example for illustration. During actual application, the foregoing functions may be allocated to different functional modules and implemented based on requirements. In other words, an inner structure of an apparatus is divided into different functional modules to implement all or some of the functions described above.

In the several embodiments provided in this application, it should be understood that the disclosed apparatus and method may be implemented in other manners. Embodiments may be combined or referenced with each other without conflict. The described apparatus embodiment is merely an example. For example, division into the modules or units is merely a logical function division, and another division manner may be used during actual implementation. For example, a plurality of units or components may be combined, or may be integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to a conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing content is merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A display control method, applied to an electronic device having a display, wherein the method comprises:
obtaining a current proximity light status of the electronic device when a target function of an application is enabled, wherein the proximity light status indicates that an object is close to or far away from the electronic device; and
if the display is in a screen-on state, when the current proximity light status changes compared with a previous proximity light status, and the current proximity light status indicates that an object is close to the electronic device, determining to delay, for preset duration, turning off the display.

2. The method according to claim 1, wherein after determining to delay, for the preset duration, turning off the display, the method further comprises:
delaying, for the preset duration, turning off the display.

3. The method according to claim 2, wherein delaying, for the preset duration, turning off the display comprises:
obtaining a proximity light status that is of the electronic device after the preset duration; and
when the proximity light status that is of the electronic device after the preset duration indicates that an object is close to the electronic device, turning off the display.

4. The method according to any one of claims 1 to 3, wherein before determining to delay, for the preset duration, turning off the display, the method further comprises:
determining that the application is a preset application.

5. The method according to claim 1, wherein after determining to delay, for the preset duration, turning off the display, the method further comprises:
obtaining a proximity light status that is of the electronic device within the preset duration; and
if the proximity light status that is of the electronic device within the preset duration indicates that an object is far away from the electronic device, terminating performing the operation of delaying, for the preset duration, turning off the display.

6. The method according to claim 5, wherein after determining to delay, for the preset duration, turning off the display, the method further comprises:
creating a delay processing task, wherein the delay processing task is a task of delaying, for the preset duration, turning off the display; and
terminating performing the operation of delaying, for the preset duration, turning off the display comprises:
deleting the delay processing task.

7. The method according to any one of claims 1 to 6, wherein the preset duration is greater than or equal to 250 ms.

8. The method according to any one of claims 1 to 7, wherein the preset duration is less than or equal to 350 ms.

9. The method according to any one of claims 1 to 7, wherein the method is performed by a power management service of the electronic device.

10. The method according to any one of claims 1 to 9, wherein the target function comprises a call function.

11. An electronic device, comprising an obtaining unit and a processing unit, wherein
the obtaining unit is configured to: obtain a current proximity light status of the electronic device when a target function of an application is enabled, wherein the proximity light status indicates that an object is close to or far away from the electronic device; and
the processing unit is configured to: if the display is in a screen-on state, when the current proximity light status changes compared with a previous proximity light status, and the current proximity light status indicates that an object is close to the electronic device, determine to delay, for preset duration, turning off the display.

12. The electronic device according to claim 11, wherein the processing unit is further configured to delay, for preset duration, turning off the display.

13. An electronic device, comprising a processor, a memory, and a display, wherein the memory and the display are coupled to the processor, the memory is configured to store program code, the program code comprises instructions, and when the processor reads the instructions from the memory, the electronic device is enabled to perform the method according to any one of claims 1 to 10.

14. A computer-readable storage medium, wherein the computer-readable storage medium comprises a computer program, and when the computer program is run on an electronic device, the electronic device is enabled to perform the method according to any one of claims 1 to 10.
